# EUROPÄISCHE PATENTSCHRIFT

(11) **EP 2 137 407 B1**
(45) Veröffentlichungstag und Bekanntmachung des Hinweises auf die Patenterteilung: **07.05.2014**
(21) Anmeldenummer: 08716491.9
(22) Anmeldetag: 13.03.2008
(51) Int. Cl.: F04B 35/04, A61C 1/00

(54) **KOLBENMASCHINE, INSBESONDERE FÜR DENTALE UND MEDIZINISCHE ZWECKE**
PISTON ENGINE, ESPECIALLY FOR DENTAL AND MEDICAL PURPOSES
MACHINE À PISTON, NOTAMMENT POUR DES UTILISATIONS DANS LE DOMAINE DENTAIRE ET MÉDICAL

(30) Priorität: 31.03.2007 DE 102007015972
(43) Veröffentlichungstag der Anmeldung: 30.12.2009
(73) Patentinhaber: Thoms, Michael, 91054 Erlangen (DE)
(72) Erfinder: Thoms, Michael, 91054 Erlangen (DE)
(74) Vertreter: Meissner, Bolte & Partner GbR
(86) Internationale Anmeldenummer: PCT/EP2008/001990
(87) Internationale Veröffentlichungsnummer: WO 2008/119447

(56) Entgegenhaltungen:
- EP-A- 0 864 750
- EP-A- 1 450 472
- WO-A-99/48613
- DE-U- 6 609 196
- US-A1- 2003 108 430

## Beschreibung

Die Erfindung betrifft einen Kolbenmaschine insbesondere für dentale und medizinische Zwecke gemäß dem Oberbegriff des Anspruchs 1.

Derartige marktbekannte Kolbenmaschinen werden insbesondere im dentalen und medizinischen Bereich eingesetzt, um saubere Druckluft zu erzeugen. Die Druckluft wird dort druckluftbetriebenen Dentalwerkzeugen zugeführt oder unmittelbar bei der Behandlung z.B. als Blasluft verwendet.

Bei bekannten Kolbenmaschinen ist ein Kolben über ein Pleuel mit einer Kurbelwelle verbunden, die ihrerseits über einen Elektromotor angetrieben wird. Der Kolben begrenzt mit einem einem Zylinder einen Arbeitsraum. Bewegt sich der Kolben von dem Zylinderkopf weg, so wird Luft über eine Zuleitung in den Arbeitsraum gesaugt. Bewegt er sich auf den Zylinderkopf zu, so komprimiert er die im Arbeitsraum enthaltene Luft. Die Druckluft wird über die Druckleitung abgeführt. Eine Kolbenmaschine mit den Merkmalen gemäß dem Oberbegriff des Anspruchs 1 ist z.B. aus dem Document DE-U-66 09 196 bekannt.

Aufgabe der vorliegenden Erfindung ist es, einen Kolbenmaschine gemäß dem Oberbegriff des Anspruchs 1 so weiterzubilden, dass mit wenig bewegten Bauteilen eine effektive und zuverlässige Förderung des Gases erfolgt. Diese Aufgabe wird erfindungsgemäß gelöst durch einen Kolbenmaschine mit den im Anspruch 1 angegebenen Merkmalen.

Erfindungsgemäß wird also der Kolben, welcher ein Kolbenmagnetfeld aufweist, alleine durch magnetische Kraft angetrieben, die aus der Wechselwirkung des Kolbenmagnetfelds mit einem durch eine äußere Statormmagnetfeldquelle erzeugten Statormagnetfeld herrührt. Eine körperliche Verbindung zu einem Antriebsmittel, beispielsweise in Form eines Pleuels, ist daher nicht erforderlich. Eine Richtungsumkehr des Kolbens wird einfach dadurch bewirkt, dass die Richtung des Statormagnetfelds oder des Kolbenmagnetfelds umgekehrt wird, also die entsprechenden Magnetpole umgekehrt werden.

Die Orientierung des Kolbens relativ zum Zylinder ändert sich bei seiner Hin- und Herbewegung nicht, so dass auch die Orientierung des Kolbenmagnetfelds, nämlich die Neigung der Feldlinien relativ zu einer Zylinderachse, nicht geändert werden. Die Umkehr des Stator-Magnetfelds oder des Kolbenmagnetfelds bewirkt daher eine Richtungsänderung der auf den Kolben wirkenden Kraft.

Außer dem Kolben sind keine weiteren beweglichen Teile erforderlich. Im Unterschied zu aus dem Stand der Technik bekannten Kolbenmaschinen mit Pleuel treten bei dem erfindungsgemäßen Kolbenmaschine nahezu keine Kräfte radial zum Zylinder auf, so dass der Verschleiß deutlich geringer ist.

Vorteilhafte Weiterbildungen der Erfindung sind in den Unteransprüchen angegeben.

Die Ansprüche 2 und 3 geben vorteilhafte Ausführungsformen an, bei denen der Kolben oder der Stator einen Permanentmagneten aufweist und das jeweils andere Magnetfeld mit stromdurchflossenen Leitern erzeugt wird.

Von weiterem Vorteil ist bei der Weiterbildung nach Anspruch 4, dass dann, wenn der Stator das bestromte Bauteil ist, die Verbindung zu der Steuereinheit einfach und robust an der Außenseite der Kolbenmaschine vorgesehen ist. Auf diese Weise sind auch große Kolbenhübe realisierbar, da zum Kolben selbst keine seine Bewegungen einschränkenden Verbindungsleitungen führen.

Durch zwei oder mehr separate Statormagnetfeldquellen, wie im Anspruch 5 angegeben, können entsprechend zwei oder mehr unterschiedliche Magnetfelder erzeugt werden, so dass die auf den Kolben einwirkende Kraft wegabhängig ist. Auf diese Weise läßt sich z.B. die auf den Kolben einwirkende Kraft in der Nachbarschaft des Endes der Verdichtungsphase erhöhen.

Eine optimale Wechselwirkung zwischen dem Kolbenmagnetfeld und dem Statormagnetfeld erfolgt, wenn die Magnetfelder parallel zueinander verlaufen. Die Magnetfelder können dabei im Zylinder parallel zu dem Bewegungsweg des Kolbens (Anspruch 6) oder senkrecht zu diesem verlaufen (Anspruch 7). Parallel zum Bewegungsweg des Zylinders verlaufende Magnetfelder können einfach dadurch erzeugt werden, dass Spulen in Längsrichtung des Zylinders um diesen gewickelt sind. Hierbei kann entweder eine einzige Spule sich über die gesamte Länge des Zylinders erstrecken oder es können zwei oder mehr separate Spulen axial fluchtend hintereinander angeordnet sein.

Bei einer weiteren vorteilhaften Ausführungsform gemäß Anspruch 8 begrenzt der Kolben zwei gegenüberliegende Arbeitsräume. Durch den Richtungswechsel des Magnetfelds der Statormagnetfeldquelle wird der Kolben unter gegensinniger Änderung der beiden Arbeitsräumen hinund herbewegt. Bei einem Hub des Kolbens auf einen der Zylinderköpfe zu, verkleinert er den dortigen Arbeitsraum und komprimiert das enthaltene Gas. Gleichzeitig strömt Zuluft über die Zuluftleitung in den anderen Arbeitsraum, den der Kolben während des Hubes vergrößert. Auf diese Weise findet bei jedem Hub eine Gasförderung statt.

Eine Weiterentwicklung dieser vorteilhaften Kolbenmaschine gemäß Anspruch 9, bei der die Arbeitsräume unterschiedlich große Querschnittsflächen haben, hat den großen Vorteil, dass das Gas in dem Arbeitsraum mit der größeren Querschnittsfläche in einer ersten Stufe vorverdichtet wird. Das vorverdichtete Gas wird dem Arbeitsraum mit der kleineren Querschnittsfläche zugeleitet und dort weiter verdichtet. Auf diese Weise kann der Verdichtungsgrad des komprimierten Gases vergrößert werden. Man hat eine sehr kompakte zweistufige Kolbenmaschine.

Gemäß Anspruch 10 werden Ansaugen und Abgeben von Gas auf einfache Weise durch Steuermittel vorgeben, die in einer Strömungsrichtung bei einer vorgegebenen Druckdifferenz öffnen und in der entgegengesetzten Strömungsrichtung stets geschlossen bleiben.

Um zu verhindern, dass der Kolben an dem Zylinderkopf anschlägt, kann gemäß Anspruch 11 der Auslass des Arbeitsraums unter kleinem Abstand von der Zylinderendwand in der Zylinderumfangswand vorgesehen sein. Der Kolben deckt so vor Erreichen des Zylinderkopfs den Auslass ab und verhindert ein weiteres Abströmen des Druckgases, so dass zwischen dem Kolben und dem Zylinderkopf ein eingeschlossenes Restgasvolumen verbleibt, welches den Kolben vor dem Erreichen des Zylinderkopfs bremst.

Eine weitere besonders vorteilhafte Ausführungsform ist in Anspruch 12 angegeben. Zwei synchron in entgegengesetzter Richtung hin- und herbewegte Kolben bewirken, dass der Schwerpunkt der Kolbenmaschine sich nicht verändert und daher die Vibrationen deutlich verringert werden.

Eine Verbindung des Kolbens mit einem Energiespeichermittel, insbesondere einer Feder, gemäß Anspruch 13 ermöglicht b ei einer Kolbenmaschine mit nur einem Arbeitraum eine gleichmäßige Belastung des Antriebs im Saughub und im Kompressionshub. Das Energiespeichermittel wird während des nur wenig Kraft erfordernden Saughubes aufgeladen und gibt die gespeicherte Energie beim nachfolgenden Kompressionshub an den Kolben ab. Das Ganze kann so eingerichtet werden, dass die auf den Kolben wirkenden Kräfte dann in beiden Bewegungsrichtungen ungefähr gleich groß sind. Bei einer zweistufigen Maschine können so unterschiedliche Nettokräfte beim Ansaugen in der ersten Stufe und gleichzeitigen Komprimieren in der zweiten Stufe (und umgekehrt) ausgeglichen werden, falls dies über eine Querschnittsflächenanpassung nicht möglich ist oder nicht gewünscht wird.

Die Weiterbildung der Erfindung gemäß Anspruch 14 ist im Hinblick auf eine gute magnetische Mitnahme des Kolbens durch das Statormagnetfeld von Vorteil.

Die Weiterbildungen gemäß den Ansprüchen 15 und 16 sind im Hinblick darauf vorteilhaft, den Kolben nach Feldumkehrung rasch wieder aus der jeweils eingenommenen Endlage in Richtung auf die andere Endlage in Gang zu setzen.

Ausführungsbeispiele der Erfindung werden nachfolgend anhand Zeichnung näher erläutert. Es zeigen
- Figur 1: schematisch ein erstes Ausführungsbeispiel einer Kolbenmaschine mit einem in einer er sten Endstellung gezeigten Kolben und zwei stromdurchflossenen Spulen, welche um den Zy linder gewickelt sind;
- Figur 2: schematisch die Kolbenmaschine gemäß Figur 1, wobei hier der Kolben sich in der anderen Endstellung befindet;
- Figur 3: schematisch ein zweites Ausführungsbeispiel einer Kolbenmaschine, welcher der gemäß den Figuren 1 und 2 ähnlich ist, wobei hier die Spulenachsen senkrecht zur Zylinderachse stehen;
- Figur 4: ein drittes Ausführungsbeispiel einer Kolbenmaschine, bei dem die Spule um einen prismatischen Polkern gewickelt ist, der senkrecht zur Zeichenebene verläuft, und der Zylinder sich zwischen den Polschuhen des Polkerns befindet (Zylinderachse steht senkrecht auf der Zeichenebene), wobie hinter der Zeichenebene eine; zweite solche Spulen/ Polschuheinheit zu denken ist, die gegensin nig bestromt wird;
- Figur 5: eine zu der Kolbenmaschine gemäß Figur 4 ähnliche Kolbenmaschines, bei der die Polschuhe transversal positionierend geformt sind;
- Figur 6: ein fünftes Ausführungsbeispiel einer Kolbenmaschine, die zweistufig aufgebaut ist;
- Figur 7: ein sechstes Ausführungsbeispiel eines Kol benverdichters, bei dem zwei zu dem ersten Ausführungsbeispiel aus den Figuren 1 und 2 ähnliche Zylinder mit jeweils einem Kolben koaxial fluchtend angeordnet sind, gezeigt in einer ersten Endstellung;
- Figur 8: die Kolbenmaschine gemäß Figur 7 in der anderen Endstellung;
- Figur 9: eine Kolbenmaschine nach Figur 1, welche nur einen Arbeitsraum hat und mit einer den Lei stungsbedarf vergleichmäßigenden Ausgleichsfeder versehen ist.

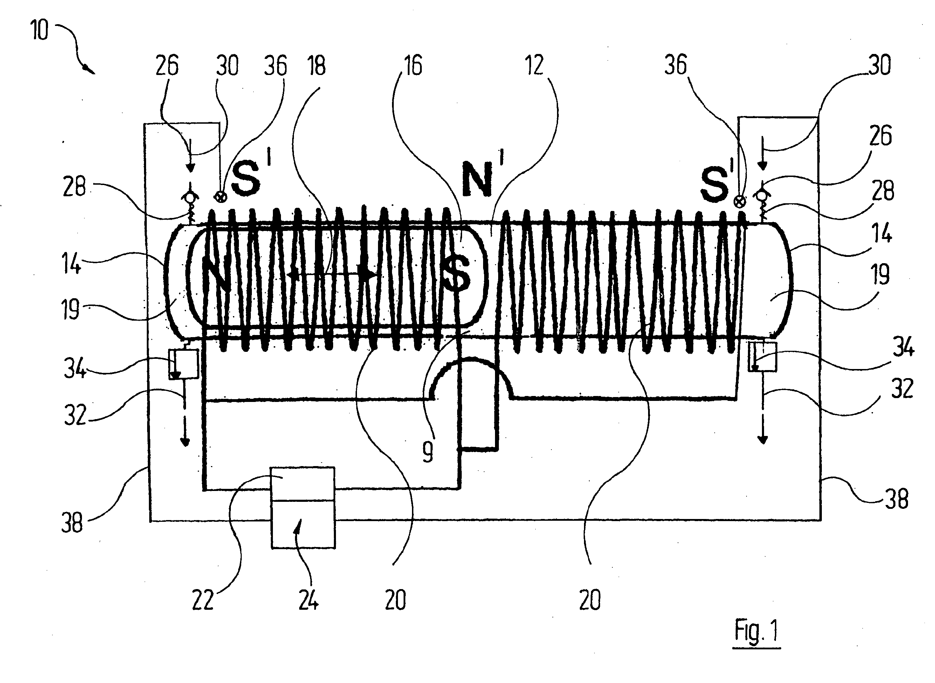

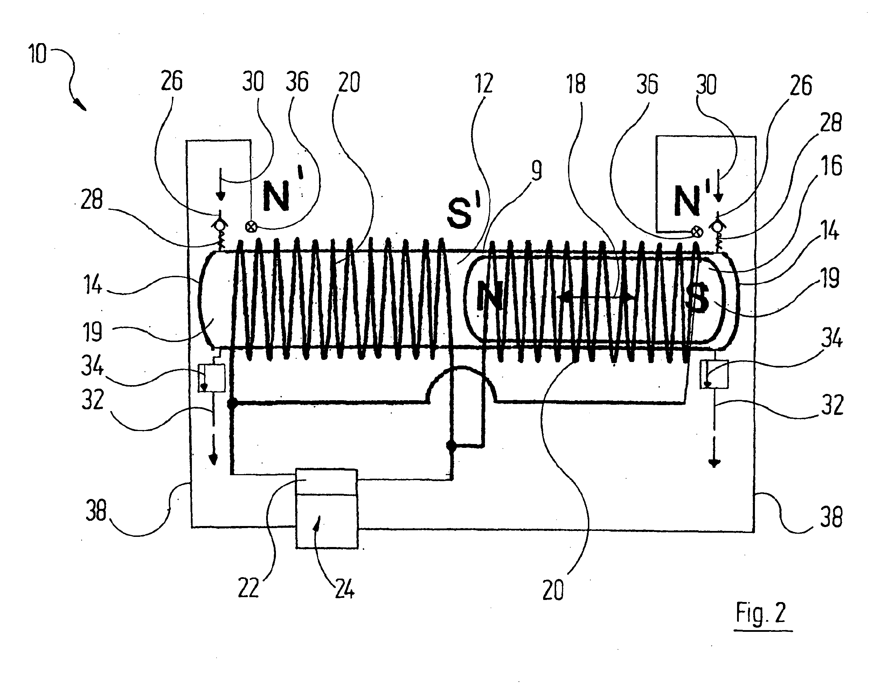

Figuren 1 und 2 zeigen ein erstes Ausführungsbeispiel eines insgesamt mit dem Bezugszeichen 10 versehenen Kolbenverdichters.

Der Kolbenverdichter 10 umfasst einen Zylinder 12, welcher im Wesentlichen aus einem geraden langgestreckten Rohr mit rundem Querschnitt besteht. Das Rohr ist an beiden Stirnseiten jeweils mit einem Zylinderkopf 14 verschlossen. Die Innenflächen der Zylinderköpfe 14 sind vom Inneren des Zylinders 12 aus betrachtet konkav gewölbt.

Der Zylinder 12 ist aus einem nicht magnetischen Material hergestellt, z.B. Messing, Aluminium oder einem Kunststoffmaterial, welches vorzugsweise faserverstärkt ist und höheren Temperaturen standhält.

In dem Zylinder 12 befindet sich ein Kolben 16, dessen Außenkontur im Querschnitt betrachtet der Innenkontur des Zylinders 12 entspricht. Der Kolbendurchmesser ist so bemessen, dass der Mantel des Kolbens 16 zwar umfänglich dicht an dem Innenmantel des Zylinders 12 anliegt, aber der Kolben 16 dennoch im Gleitspiel im Zylinder 12 in dessen Längsrichtung, in Figuren 1 und 2 in Richtung eines Doppelpfeils 18 (Hubrichtung), verschiebbar ist. Ggf. ist der Durchmesser des Kolbens 16 kleiner als einem Gleitspiel entspricht, und der Kolben trägt an seinen Enden Kunststoff-Dichtungen 9, welche die Führungs- und Dichtfunktion übernehmen.

Die Länge des Kolbens 16 in Hubrichtung 18 entspricht beim gezeigten Beispiel etwa der halben Länge des Zylinders 12. Der Kolben 16 kann aber auch kürzer oder länger sein. Die Stirnflächen des Kolbens 16 sind von außen betrachtet konvex gewölbt und weisen etwa die gleich Krümmung wie die Innenflächen der Zylinderköpfe 14 auf.

Die Stirnflächen des Kolbens 16 , die Innenfläche des Zylinders 12 und die Innenflächen der Zylinderköpfe 14 begrenzen jeweils einen Arbeitsraum 19.

Der Kolben 16 ist aus Permanentmagnet-Material (z.B. NdFeB) herge-stellt und ist axial magnetisiert. Er erzeugt so ein Kolbenmagnetfeld N, S. Der Nordpol N des Permanentmagneten befindet sich in den Figuren 1 und 2 auf der dem linken Zylinderkopf 14 zugewandten Stirnseite, der Südpol S auf der dem rechten Zylinderkopf 14 zugewandten Stirnseite des Kolbens 16. Die Magnetpole N und S des Permanentmagneten geben in bekannter Weise die Richtung des Kolbenmagnetfelds N, S vor, welches hier parallel zur Achse des Zylinders 12, also parallel zur Hubrichtung 18, verläuft.

Der Zylinder 12 ist in Längsrichtung mit zwei Spulen 20 umwickelt, welche hintereinander angeordnet sind. Die Anschlüsse der Spulen 20 sind mit den Polen einer umsteuerbaren Gleichspannungsquelle 22 verbunden, die ihrerseits Teil einer Steuereinheit 24 ist. Die Polung der Gleichspannungsquelle 22 ist durch die Steuereinheit 24 umkehrbar.

Die beiden Spulen 20 sind so gwickelt und geschaltet, dass bei jeder beliebigen Polung der Gleichspannungsquelle 22 die durch den Stromfluss durch die Spulen 20 jeweils erzeugten Spulenmagnetfelder N`, S' entgegengesetzt gerichtet sind und im Inneren der Spulen 20 parallel zur Hubrichtung 18 verlaufen. Der Verlauf der Spulenmagnetfelder N`, S' ist in den Figuren 1 und 2 in bekannter Weise durch die Nordpole N' und die Südpole S' an den Stirnseiten der Spulen 20 veranschaulicht.

In den Figuren 1 und 2 sind die beiden Spulen 20 in gleicher Richtung um den Zylinder 12 gewickelt. Zwei nicht äquivalente Anschlüsse der Spulen 20 sind mit dem gleichen Pol der Gleichspannungsquelle 22 verbunden. Die beiden anderen Anschlüsse der Spulen 20 sind mit dem anderen Pol der Gleichspannungsquelle 22 verbunden.

In Figur 1 ist die Gleichspannungsquelle 22 so gepolt, dass der Kolben 16 nach links bewegt wurde.

In Figur 2 ist die Situation gezeigt, die sich bei umgekehrter Polung der Gleichspannungsquelle 22 ergibt. Der Kolben 16 wurde nun nach rechts bewegt.

Durch zyklisches Umpolen der Gleichspannungsquelle 22 wird der Kolben 16 in Hubrichtung 18 zwischen den Zylinderköpfen 14 hin und herbewegt und vergrößert dabei jeweils einen der Arbeitsräume 19 während er gleichzeitig den anderen Arbeitsraum 19 verkleinert.

Im Bereich jedes Zylinderkopfs 14 führt seitlich durch die Wand des Zylinders 12, in den Figuren 1 und 2 von oben, eine Zuleitung 26 für zu verdichtende Luft, und zwar an einer Stelle, die dem Zylinderkopf benachbart ist. Die freien Enden der Zuleitungen 26 sind zur Umgebung hin offen. Über sie wird Umgebungsluft angesaugt. In den Zuleitungen 26 sind jeweils ein Rückschlagventil 28 und bekannte nicht gezeigte Filter angeordnet.

Das Rückschlagventil 28 öffnet sich im Expansionstakt, in welchem der Kolben 16 sich von dem entsprechenden Zylinderkopf 14 wegbewegt, so dass Luft in Zustromrichtung, in Richtung eines Pfeils 30, dem jeweiligen Arbeitsraum 19 zuströmen kann. Im Kompressionstakt desselben Arbeitsraumes 19 schließt das Rückschlagventil 28 und verhindert so ein Rückströmen von komprimierter Luft in die entsprechende Zuleitung 26.

Auf der den Zuleitungen 26 gegenüberliegenden Seite führt aus dem Zylinder 12 im Bereich jedes Zylinderkopfs 14 seitlich eine Druckleitung 32 für die Druckluft heraus. Die Druckleitungen 32 führen z.B. zu einem nicht dargestellten bekannten druckluftbetriebenen Dentalwerkzeug. Jede Druckleitung 32 weist ein Überdruckventil 34 auf. Die Überdruckventile 34 befinden sich wie die Rückschlagventile 28 der Zuleitungen 26 unmittelbar beim Zylinder 12.

Der Übersichtlichkeit halber ist in den Figuren 1 und 2 jeweils eine Verbindungsleitung zwischen dem Zylinder 12 und dem Druckventil 34 gezeigt; in der Realität ist diese deutlich kürzer oder nicht vorhanden, um Totvolumina zu vermeiden. Gleiches gilt für die Rückschlagventile 28.

Sobald der Druck im entsprechenden Arbeitsraum 19 den Druck in der Druckleitung 32 übersteigt, öffnet das Überdruckventil 34 und entläßt die Druckluft aus dem Arbeitsraum 19 in die Druckleitung 32. In umgekehrter Strömungsrichtung bleibt das Überdruckventil 34 immer geschlossen. Das Überdruckventil 34 kann auch so ausgestaltet sein, dass es erst bei Erreichen einer bestimmten Druckdifferenz zwischen dem Druck im Arbeitsraum 19 und dem Druck in der Druckleitung 32 öffnet.

Die Mündung jeder Druckleitung 32 in den Zylinder 12 befindet sich in einem kleinen axialen Abstand zu der Innenfläche des entsprechenden Zylinderkopfs 14.

Bei einem Hub des Kolbens 16 auf die Innenfläche des Zylinderkopfs 14 zu verschließt so die Außenmantelfläche des Kolbens 16 die Mündung der Druckleitung 32, so dass keine weitere Druckluft aus dem Arbeitsraum 19 antweichen kann. In dem Bereich zwischen der Stirnfläche des Kolbens 16 und der Innenfläche des Zylinderkopfs 14 verbleibt ein Restluftvolumen, welches die Bewegung des Kolbens 16 abbremst und so verhindert, dass der Kolben 16 gegen die Innenfläche des Zylinderkopfs 14 stößt.

Im Bereich der Zylinderköpfe 14 ist außerdem jeweils ein Lagesensor 36 angeordnet, der in den Figuren 1 und 2 jeweils oberhalb der Zylinderköpfe 14 gezeigt ist. Die Lagesensoren 36 sind über Signalleitungen 38 mit der Steuereinheit 24 verbunden. Die Lagesensoren 36 erfassen die Anwesenheit des Kolbens 16 nahe des jeweils entsprechenden Zylinderkopfs 14 und definieren dort einen jeweiligen Umkehrpunkt. Sobald der Kolben 16 sich im Bereich des Zylinderkopfs 14 an dem entsprechenden Umkehrpunkt befindet, übermittelt der jeweilige Lagesensor 36 ein Signal an die Steuereinheit 24, welche daraufhin die Gleichspannungsquelle 22 umgepolt. Die Spulen 20 werden dann in umgekehrter Richtung mit Strom durchflossen, so dass auch deren Spulenmagnetfelder N`, S' sich umkehren und der Kolbens 16 umgekehrt bewegt wird.

Bei einem Hub des Kolbens 16 von dem in Figur 1 linken Zylinderkopf 14 weg zu dem rechten Zylinderkopf 14 hin - die Endposition des Kolbens 16 am rechten Zylinderkopf 14 ist in Figur 2 gezeigt - öffnet sich das Rückschlagventil 28 am linken Zylinderkopf 14, so dass Luft dem linken Arbeitsraum 19 zuströmen kann. Gleichzeitig wird die im rechten Arbeitsraum 19 vorhandene Luft komprimiert. Das Rückschlagventil 28 des rechten Arbeitsraumes 19 bleibt hierbei geschlossen. Sobald der Auslösedruck des rechten Druckventils 34 erreicht ist, öffnet dieses, so dass die Druckluft aus dem rechten Arbeitsraum 19 durch das rechte Druckventil 34 und die rechte Druckleitung 32 entweichen und dem Dentalwerkzeug zuströmen kann.

Bei Erreichen des rechten Lagesensors 36 wird die Gleichspannungsquelle 22 erneut umgepolt und das Vorgehen in umgekehrter Richtung entsprechend wiederholt. So wird zyklisch im Wechsel bei jedem Hub des Kolbens 16 in einem Arbeitsraum 19 die Luft komprimiert und gleichzeitig in dem anderen Arbeitsraum 19 frische Luft angesaugt.

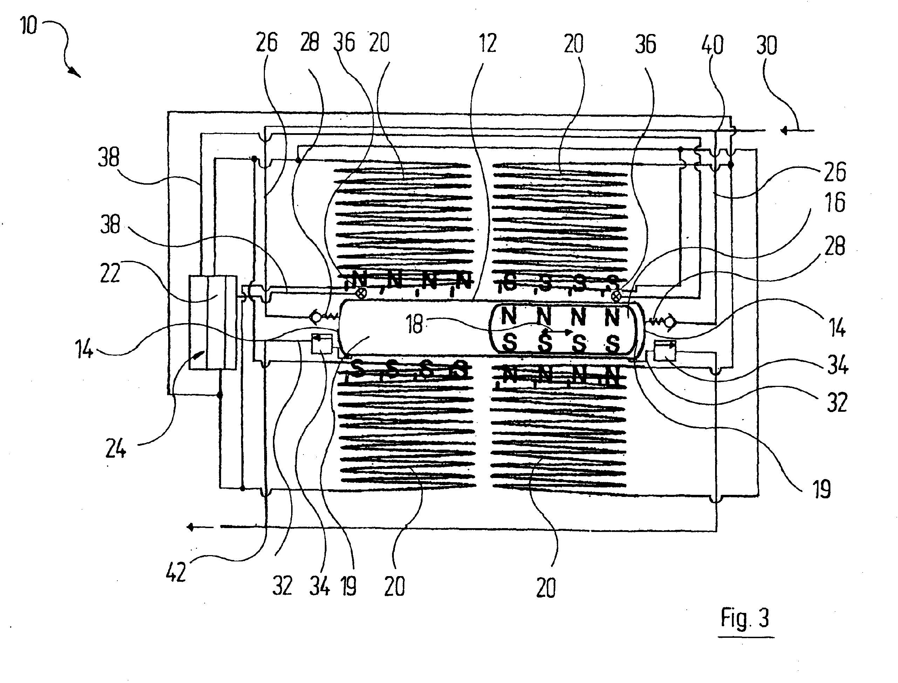

In Figur 3 ist ein zweites Ausführungsbeispiel eines Kolbenverdichters 10 gezeigt. Diejenigen Elemente, die zu denen des ersten, in den Figuren 1 und 2 gezeigten, Ausführungsbeispiels ähnlich sind, sind mit denselben Bezugszeichen versehen.

Das zweite Ausführungsbeispiel unterscheidet sich von dem ersten dadurch, dass die Spulen 20 statt um den Zylinder 12 gewickelt neben diesem angeordnet sind, wobei die Spulenachsen nun senkrecht zur Zylinderachse stehen. Außerdem sind jedem Arbeitsraum 19 statt nur einer Spule 20 zwei Spulen 20 zugeordnet, die sich auf gegenüberliegenden Seiten des Zylinders 12 befinden.

Die Spulen 20 sind in einer Weise mit der Gleichspannungsquelle 22 verbunden, dass die Spulenmagnetfelder N', S' der nahe einem der Zylinderköpfe 14 sich jeweils radial gegenüberliegenden Spulen 20 eines Spulenpaares gleichgerichtet sind. Die Spulenmagnetfelder N', S' axial benachbarter Spulenpaare haben hingegen entgegengesetzte Richtungen.

In dem in Figur 3 gezeigten Ausführungsbeispiel sind alle Spulen 20 in gleicher Wickelrichtung gewickelt. Jeweils der dem Zylinder 12 abgewandte Anschluss einer Spule 20 eines Spulenpaares ist gemeinsam mit dem dem Zylinder 12 zugewandten Anschluss der anderen Spule 20 des gleichen Spulenpaares mit dem gleichen Pol der Gleichspannungsquelle 22 verbunden. Entsprechend sind die beiden anderen Anschlüsse dieses Spulenpaares mit dem anderen Pol der Gleichspannungsquelle 22 verbunden. Die Anschlüsse des anderen Spulenpaares sind analog miteinander, aber umgekehrt zu denen des erstgenannten Spulenpaares mit den Polen der Gleichspannungsquelle 22 verbunden.

Die beiden mit den Spulenpaaren erzeugten resultierenden Spulenmagnetfelder N', S' verlaufen im Zylinder 12 senkrecht zur Zylinderachse in entgegengesetzter Richtung. Bei der in Figur 3 gezeigten Polung der Gleichspannungsquelle 22 ist benachbart zu dem linken Zylinderkopf 14 oberhalb des Zylinders 12 der Nordpol N' und unterhalb des Zylinders 12 der Südpol S' angeordnet. Das entsprechende Spulenmagnetfeld N`, S' durchflutet den Zylinder 12 vom linken Zylinderkopf 14 bis etwa der Mitte des Zylinders 12. Zwischen der Mitte des Zylinders 12 und dem rechten Zylinderkopf 14 ist das Spulenmagnetfeld N', S' dem erstgenannten Spulenmagnetfeld N', S' entgegengerichtet.

Das Kolbenmagnetfeld N, S ist im Unterschied zum ersten Ausführungsbeispiel beim zweiten Ausführungsbeispiel senkrecht zur Hubrichtung 18 orientiert. In Figur 3 ist der Nordpol N des Kolbens 16 oben und sein Südpol S unten. Der Kolben 16 befindet sich daher in Figur 3 dargestellt in der für ihn energetisch günstigen Lage nahe dem rechten Zylinderkopf 14, wo das Kolbenmagnetfeld N, S dem durch das dortige Spulenpaar erzeugten Spulenmagnetfeld N', S' entgegengerichtet ist.

Darüber hinaus kommen beim zweiten Ausführungsbeispiel die Zuleitungen 26 von einem gemeinsamen Verteiler 40, in Figur 3 oben rechts. Die Druckleitungen 32 führen zu einem gemeinsamen Sammelpunkt 42, in Figur 3 unten links.

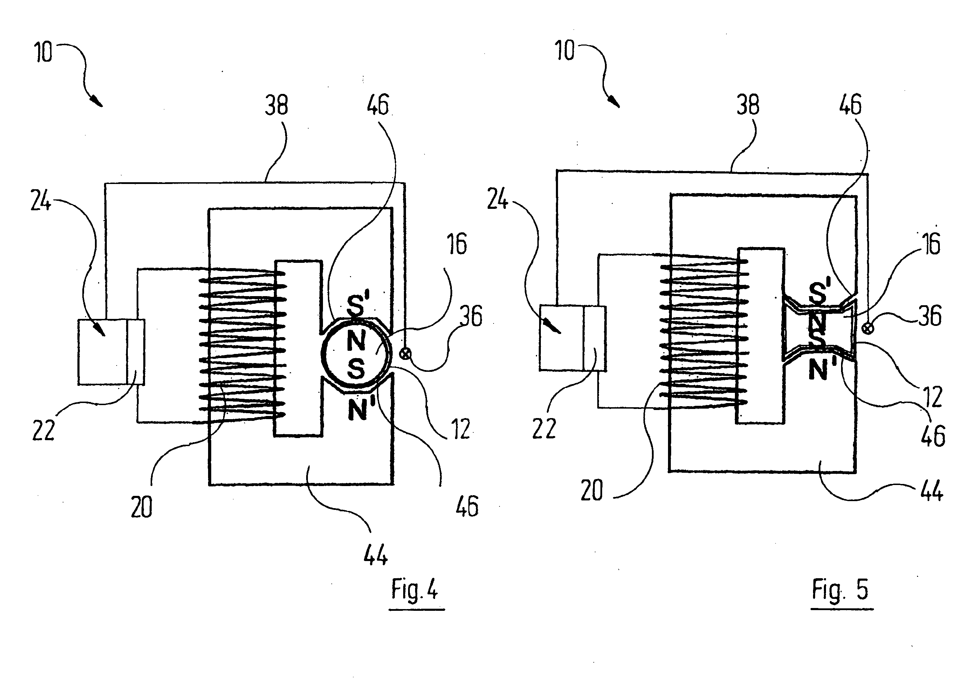

Ein drittes Ausführungsbeispiel, dargestellt in Figur 4, unterscheidet sich von dem zweiten, in Figur 3 dargestellten Ausführungsbeispiel dadurch, dass für jedes Zylinderende statt eines Spulenpaares lediglich eine einzige Spule 20 vorgesehen ist, die um einen Polkern 44 aus Weicheisen gewickelt ist. Der Polkern 44 hat eine Hufeisenform, seine Polschuhe 46 liegen einander gegenüber.

In dem Spalt zwischen den Polschuhen 46 befindet sich der Zylinder 12. Die Zylinderachse verläuft dabei senkrecht zu dem Spulenmagnetfeld N', S' zwischen den Polschuhen 46. Die einander zugewandten Oberflächen der Polschuhe 46 sind vom Zylinder 12 aus betrachtet konkav gebogen und umgreifen den Zylinder 12 entlang seines Außenmantels. Das Spulenmagnetfeld N', S' wird über die Polschuhe 46 durch den Zylinder 12 geleitet.

Beim zweiten Zylinderende ist eine entsprechende Statoreinheit vorgesehen, und die Bestromung der beiden Spulen 20 erfolgt ähnlich wie für die Spulenpaare von Figur 3 im einzelnen beschrieben.

In Figur 5 ist ein viertes Ausführungsbeispiel dargestellt, welches sich von dem dritten Ausführungsbeispiel aus Figur 4 dadurch unterscheidet, dass die einander zugewandten Oberflächen der Polschuhe 46 vom Zylinder 12 aus betrachtet konvex gebogen und die Wand des Zylinders 12 und die Wand des Kolbens 16 im Bereich der Polschuhe 46 jeweils entsprechend zu ihrem Inneren hin gebogen sind.

Das Kolbenmagnetfeld N, S konvergiert somit zu den Polschuhen 46 hin. Der Kolben 16 wird so auch dann zwischen den Polschuhen 46 zentriert, wenn die Spule 20 nicht bestromt ist. Darüber hinaus verhindert die konvexe, in den Zylinder 12 und den Kolben 16 eingreifende Form der Polschuhe 46 und die entsprechend unrunde Querschnittsform des Zylinders 12, dass sich der Kolben 16 im Zylinder 12 um seine Längsachse dreht.

Bei einem weiteren nicht dargestellten Ausführungsbeispiel, welches dem dritten und dem vierten Ausführungsbeispiel ähnlich ist, sind drei Spulen/Polkernpakete nebeneinander in Längsrichtung des Zylinders angeordnet. Auf diese Weise können die Spulen statt mit Gleichspannung jeweils mit einer Phase eines dreiphasigen Drehstroms beaufschlagt werden und so durch Änderung der Polung des Drehstroms die entsprechend alternierenden Spulenmagnetfelder erzeugt werden, die zur Bewegung des Kolbens führen.

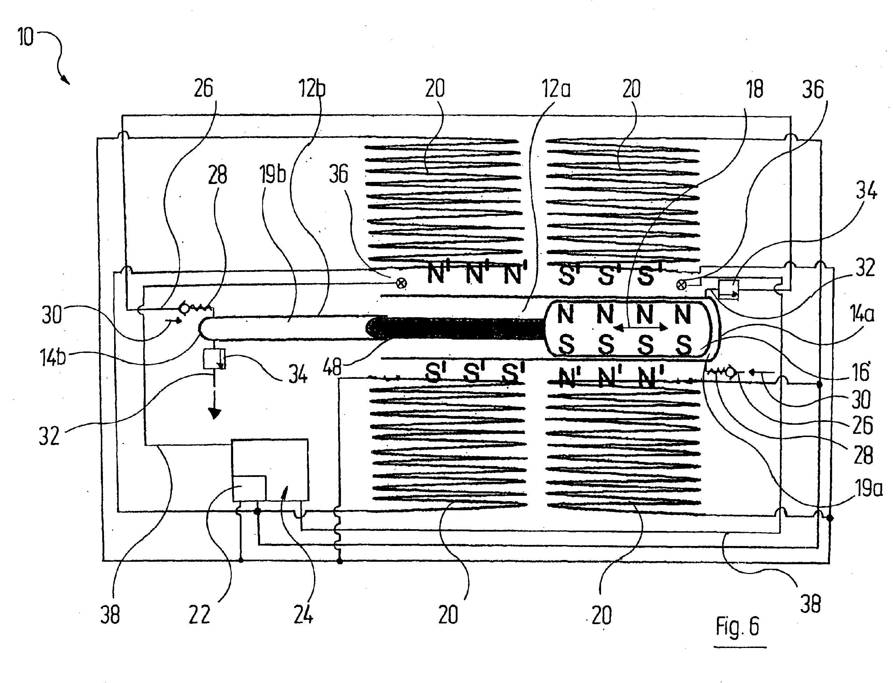

In Figur 6 ist ein fünftes Ausführungsbeispiel eines Kolbenverdichters 10 gezeigt. Diejenigen Elemente, die zu denen des zweiten Ausführungsbeispiels, welches in Figur 3 gezeigt ist, ähnlich sind, sind mit denselben Bezugszeichen versehen.

Das fünfte Ausführungsbeispiel unterscheidet sich von dem zweiten gemäß Figur 3 dadurch, dass der Zylinder zweigeteilt ist und zwei Zylindersegmente 12a und 12b aufweist, welche unterschiedliche Querschnittsflächen haben.

Das Zylindersegment 12a mit dem größeren Querschnitt, in Figur 6 rechts, weist an seiner freien Stirnseite einen entsprechend großen Zylinderkopf 14a auf. Die andere Stirnseite des großen Zylindersegments 12a ist offen. In dem großen Zylindersegment 12a bewegt sich auch der Kolben 16, welcher einen dem großen Zylindersegment 12a entsprechenden Querschnitt hat. Das große Zylindersegment 12a ist etwa doppelt so lang wie der Kolben 16.

Das andere, in der Zeichnung links gelegene Zylindersegment 12b, welches einen etwa 4-mal kleineren Querschnitt hat als das große Zylindersegment 12a, schließt sich auf der vom großen Zylinderkopf 14a abgewandten, offenen Stirnseite koaxial in Verlängerung der Achse des großen Zylindersegments 12a an. Das kleine Zylindersegment 12b ist an seinem rechten Ende offen. Die vom großen Zylindersegment 12a abgewandte Stirnseite des kleinen Zylindersegments 12b ist mit einem entsprechend kleinen Zylinderkopf 14b verschlossen.

Auf der dem kleinen Zylindersegment 12b zugewandten Seite trägt der Kolben 16 koaxial einen stabförmigen weiteren Kolben 48 aus einem nichtmagnetischen Material auf, dessen Außendurchmesser dem Innendurchmesser des kleinen Zylindersegments 12b entspricht. Die Länge des weiteren Kolbens 48 entspricht der Länge des kleinen Zylindersegments 12b, so dass er vollständig von der offenen Stirnseite in diesen eintauchen kann.

In das große Zylindersegment 12a und das kleine Zylindersegment 12b führen nahe den Zylinderköpfen 14a beziehungsweise 14b analog zum zweiten Ausführungsbeispiel auf der einen Seite eine Zuleitung 26 hinein und auf der gegenüberliegenden Seite eine Druckleitung 32 heraus. Die Druckleitung 32 am großen Zylinderkopf 14a führt zur Zuleitung 26 am kleinen Zylinderkopf 14b. Die Druckleitung 32 am kleinen Zylinderkopf 14b stellt den Auslaß des zweistufigen Verdichters dar und führt z.B. zu einem nicht gezeigten druckluftbetriebenen Dentalwerkzeug.

Nur das große Zylindersegment 12a, in dem sich der Kolben 16 bewegt, befindet sich entsprechend dem Zylinder 12 des zweiten Ausführungsbeispiels zwischen zwei benachbarten Spulenpaaren 20.

In der in der Zeichnung nicht gezeigten zweiten, linken Kolbenendposition steht der Kolben 16 nahe beim Zylindersegment 12b, und der weitere Kolben 48 ist vollständig in das kleine Zylindersegment 12b eingetaucht, so dass der dortige Arbeitsraum 19b sein minimales Volumen hat. Der Arbeitsraum 19a beim großen Zylinderkopf 14a hingegen hat sein maximales Volumen und ist mit angesaugter Luft gefüllt.

Durch Umpolung der Gleichspannungsquelle 22 mittels der Steuereinheit 24 werden die Ströme in den beiden Spulenpaaren 20 umgekehrt. Dies bewirkt die Umkehr der Spulenmagnetfelder N', S'. Der Kolben 16 bewegt sich aus der nun energetisch ungünstig gewordenen Lage heraus nach rechts. Dabei komprimiert er die im dortigen Arbeitsraum 19a enthaltene Luft.

Gleichzeitig zieht er den weiteren Kolben 48 aus dem kleinen Zylindersegment 12b und vergrößert den dortigen Arbeitsraum 19b, so dass in diesen Luft angesaugt wird.

Sobald der Öffnungsdruck des Überdruckventils 34 des großen Zylinderkopfs 14a erreicht ist, strömt die Druckluft über Druckleitung 32, die Zuleitung 26 des kleinen Zylindersegmentes 12b und das Rückschlagventil 28 am kleinen Zylinderkopf 14 in den Arbeitsraum 19b des kleinen Zylindersegments 12b ein. Dieses füllt sich so gleichzeitig mit der verdichteten Luft aus dem großen Zylindersegment 12a.

Sobald der Kolben 16 seine rechte Umkehrposition in der Nähe des großen Zylinderkopfs 14a erreicht hat, übermittelt der entsprechende Lagesensor 36 ein Signal an die Steuereinheit 24, worauf diese die Gleichspannungsquelle 22 umpolt. Danach ändert der Kolben 16 seine Hubrichtung 18 und bewegt sich auf das kleine Zylindersegment 12b zu. Dabei taucht der weitere Kolben 48 in das kleine Zylindersegment 12b ein und verkleinert den dortigen Arbeitsraum 19b, so daß die dort befindliche schon verdichtete Luft weiter verdichtet wird.

Gleichzeitig öffnet das Rückschlagventil 28 des großen Zylindersegments 12a, so dass der dortige größer werdende Arbeitsraum 19a sich mit frischer Luft füllt.

Sobald der Öffnungsdruck des Überdruckventils 34 am kleinen Zylinderkopf 14b erreicht ist, öffnet dieses und gibt die zweistufig verdichtete Druckluft über die Druckleitung 32 ab, z. B. an ein Dentalwerkzeug.

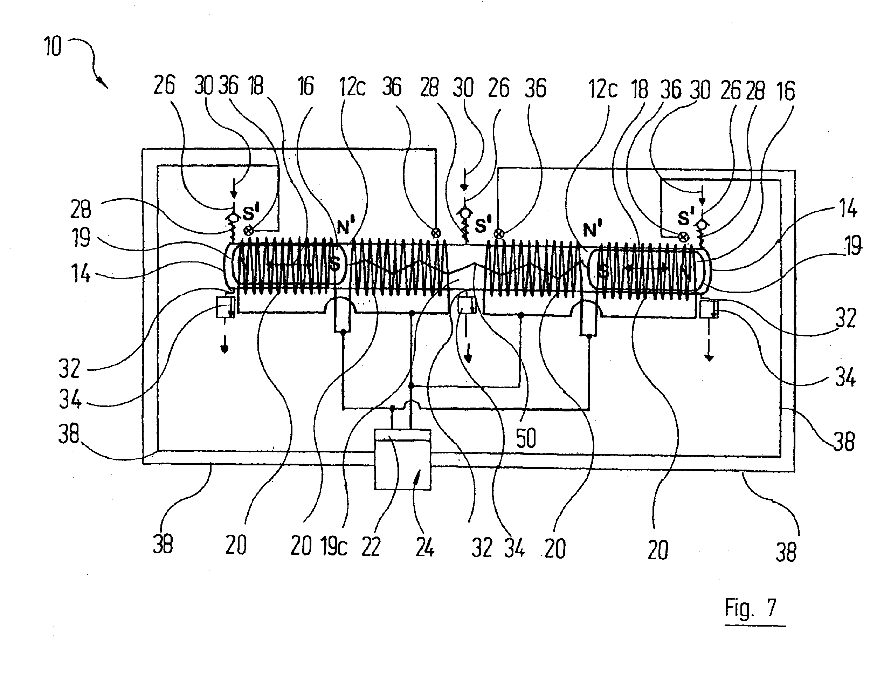

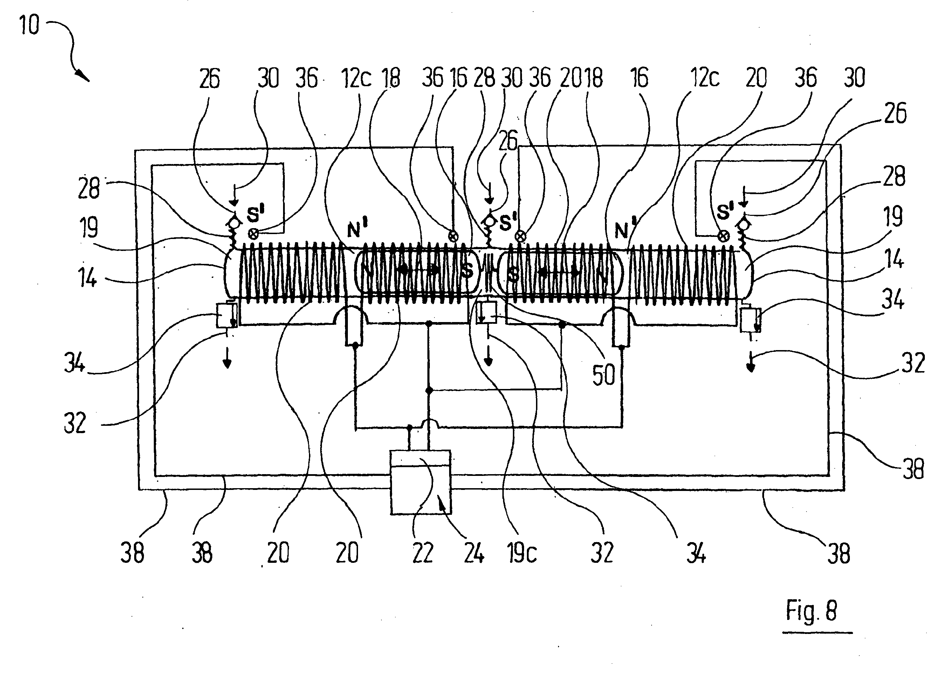

Ein sechstes Ausführungsbeispiel eines Kolbenverdichters 10 ist in den Figuren 7 und 8 gezeigt. Beim sechsten Ausführungsbeispiel sind zwei Zylinder 12c mit jeweils einem Kolben 16 koaxial hintereinander liegend angeordnet. Diejenigen Elemente, die zu denen des ersten Ausführungsbeispiels ähnlich sind, sind mit denselben Bezugszeichen versehen.

Die Umfangswände der Zylinder 12c gehen an der Stoßstelle glatt ineinander über. Auf diese Weise wird im Bereich des Übergangs der beiden Zylinder 12c ein gemeinsamer Arbeitsraum 19c gebildet, in den seitlich eine Zuleitung 26 mit einem Rückschlagventil 28 hineinführt und aus dem auf der gegenüberliegenden Seite seitlich eine Druckleitung 32 mit einem Überdruckventil 34 herausführt.

Die Spulen 20, die um die beiden Zylinder 12c gewickelt sind, sind bei der gezeigten zur Mittelebene der Zylinderanordnung spiegelbildlichen Magnetisierung der beiden Kolben jeweils so geschaltet wie in Figur 1 gezeigt, so dass bei einer Bestromung jeweils im Bereich der beiden äußeren Zylinderköpfe 14 und im Bereich des gemeinsamen Arbeitsraumes 19c ungleichnamige Einzelpole realisiert werden und sich die beiden Kolben 16 symmetrisch gegensinnig in der Doppel-Zylinderanordnung 12 bewegen. D.h. das Gesamtfeld der Statoranordnung verläuft je nach Polung des Stromes entweder von links nach rechts oder von rechts nach links.

In Figur 7 ist eine erste Endlagensituation dargestellt, bei der die Klben 16 bei ihren Zylinderköpfen 14 stehen. Figur 8 zeigt die zweite Endlagensituation, die nach Umpolung der Gleichspannungsquelle 22 erhalten wurde.

Die Kolbenmagnetfelder N, S der beiden Kolben 16 sind, wie oben erwähnt, einander entgegengesetzt gerichtet. Dadurch ist zum einen gewährleistet, dass sie gegensinnig bewegt werden. Bei abgeschaltetem Strom bewirken die entgegengerichteten Kolbenmagnetfelder N, S aber auch, dass die beiden Kolben 16 sich gegenseitig abstoßen.

Bei dem Kolbenverdichter 10 nach Figur 7 leisten die Kolben beide immer die gleiche Arbeit. Bei jedem Hub saugen sie Umgebungsluft an und verdichten Luft. Damit ist der elektromagnetische Antrieb auch gleichmäßig belastet.

Beim Betreiben des Kolbenverdichters 10 gemäß dem sechsten Ausführungsbeispiel sind die Hubrichtungen 18 der beiden Kolben 16 immer entgegengesetzt, so dass der Schwerpunkt des Kolbenverdichters 10 insgesamt in Ruhe bleibt. Auf diese Weise werden Vibrationen deutlich reduziert. Die zueinander entgegengerichteten Kolbenmagnetfelder N, S und die Schubwirkung der Feder 50 bewirken außerdem, dass die beiden Kolben 16 bei einer Bewegung aufeinander zu bei einer Annäherung abgebremst und in einem Abstand gehalten werden.

Bei einem Kolbenverdichter, der nur einen Arbeitraum hat und bei einem zweistufigen oder mehrstufigen Kolbenverdichter mit nicht an die Druckübersetzung angepassten Querschnitts-verhältnissen, sind die zum Bewegen des Kolbens/der Kolben (der Kolbenanordnung) benötigten Kräfte in den beiden Richtungen nicht gleich. Man kann dann zusätzlich eine Feder oder einen anderen elastischen Energiespeicher vorsehen, der beim Bewegen der Kolbenanordnung in der Richtung, die an sich weniger Kraft benötigt, gespannt wird und die gepeicherte Energie beim Bewegen der Kolbenanordnung in der anderen Richtung wieder abgibt und so einen Teil der Verdichtungsarbeit übernimmt. Auch so läßt sich eine gleichbleibende Belastung des Magnetantriebes gewährleisten.

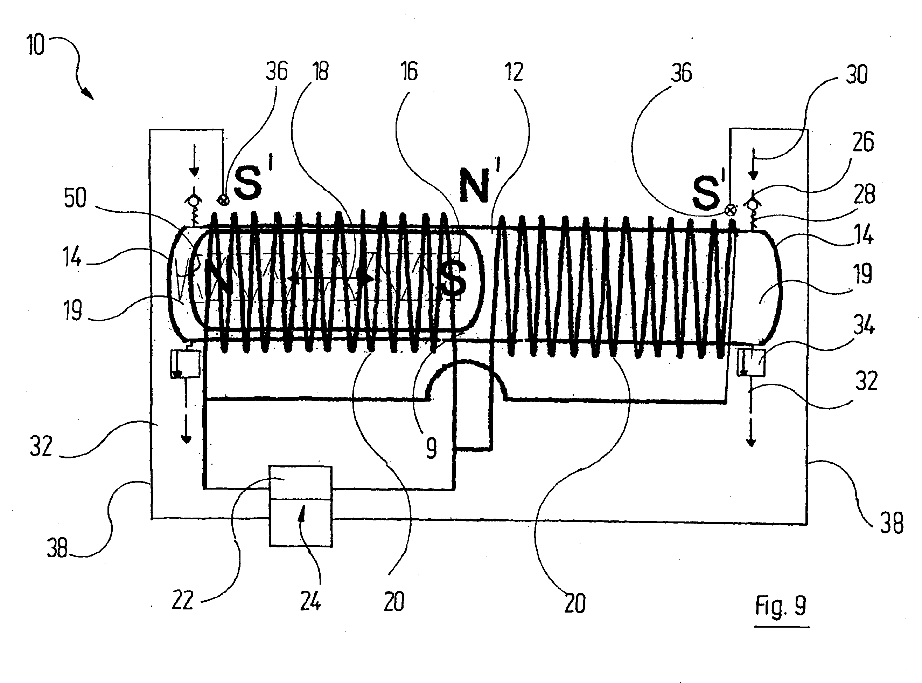

Eine derartige der Vergleichmäßigung des Leistungsbedarfes dienende Feder ist bei einem einstufigen Kolbenverdichter von Figur 9 bei 50 angedeutet. Dieser Verdichter ist aus dem von Figur 1 einfach dadurch abgeleitet, daß der dort links gelegene Arbeitraum ständig mit der Umgebung in Verbindung steht.

Bei allen oben beschriebenen Ausführungsbeispielen eines Kolbenverdichters 10 sind unter anderem folgende Modifikationen möglich:
Statt mit einer umschaltbaren Gleichspannung, können die Spulen 20 auch mit einer Wechselspannung niederer Frequenz betrieben werden. In diesem Fall bewirkt der Phasenwechsel bei der Wechselspannung die Umpolung der Spulenmagnetfelder. Die Kolben 16 bewegen sich so zyklisch mit der Wechselspannung hin und her. Auf die Lagesensoren 36 kann dann verzichtet werden.

Statt der Spulen 20 können auch andersartige Magnetfeldquellen, insbesondere stromdurchflossene Leiter, verwendet werden. Es können auch jeweils lineare Elektromagnete eingesetzt werden, deren Polkerne gerade sind. Die Magnetfelder können statt in Hubrichtung 18 oder senkrecht zur Hubrichtung 18 auch schräg zu dieser verlaufen.

Die Querschnittsflächen der Zylinder 12; 12a, 12b; 12c und der Kolben 16 können auch oval, anders unrund oder polygonal sein.

Statt vollständig aus permanentmagnetischem Material können die Kolben 16 auch nur teilweise aus permanentmagnetischem Material sein. Es kann jeweils auch ein Permanentmagnet vorgesehen sein, der entsprechend orientiert im Inneren des Kolbens 16 oder an dessen Außenseite angeordnet ist.

Statt der Spulen 20 außerhalb des Zylinders 12; 12a, 12b; 12c können dort auch Permanentmagneten vorgesehen sein. Der Kolben kann dann einen stromdurchflossenen Leiter aufweisen, der mit der Spannungsquelle verbunden ist. In diesem Fall wird das Kolbenmagnetfeld N, S statt des Spulenmagnetfelds N', S' umgepolt.

Die Zylinderköpfe 14; 14a und/oder die Zylinder 12; 12a, 12b; 12c können darüber hinaus mit Kühlrippen versehen sein.

Die Kolben 16 und/oder die Innenmantelflächen der Zylinder 12; 12a, 12b; 12c können ferner eine verschleißmindernde Schicht beispielsweise aus Teflon aufweisen. Des Weiteren kann der Magnetfluss vergrößert werden, indem die Spulen 20 mit weichmagnetischen Blechen kombiniert werden.

Ferner können die Kolbenverdichter 10 jeweils auch nur einen Arbeitsraum 19 aufweisen, wenn lediglich ein Zylinderkopf 14 und dortige Anschlüsse für das Druckventil 34 und das Rückschlagventil 28 verwendet werden.

Statt der Überdruckventile 34 können auch einfache Rückschlagventile vorgesehen sein.

## Patentansprüche

1. Kolbenmaschine (10) insbesondere für dentale und medizinische Zwecke zum Verdichten oder Saugen von Gas, insbesondere Luft, mit
a) einer Einlassöffnung (26) und einer Auslassöffnung (32);
b) mit einem Zylinder (12; 12a, 12b; 12c);
c) einem Kolben (16), der in dem Zylinder (12; 12a, 12b; 12c) hin- und herbewegbar ist, so dass eine Stirnseite des Kolbens (16) und der Zylinder (12; 12a, 12b; 12c) einen Arbeitsraum (19; 19a, 19b; 19c) begrenzen, der stets mit der Einlassöffnung (26) und der Auslassöffnung (32) in Verbindung steht; und
d) einem Antrieb für den Kolben (16),
**dadurch gekennzeichnet, dass**
e) der Kolben (16) eine Kolbenmagnetfeldquelle auf weist, die ein Kolbenmagnetfeld (N, S) erzeugt;
f) eine Statormagnetfeldquelle (20) vorgesehen ist, die ein Statormagnetfeld (N', S') erzeugt, das den Zylinder (12; 12a, 12b; 12c) durchdringt, wobei das Kolbenmagnetfeld (N, S) und das Statormagnet feld so ausgerichtet ist, dass bei einer Änderung des Statormagnetfelds (N', S') oder des Kolbenma gnetfelds (N, S) eine magnetische Kraft mit in Richtung der Zylinderachse verlaufender Kompo nente auf den Kolben (16) wirkt;
g) eine Steuereinheit (24) für die Kolbenmagnetfeldquelle und/öder die Statormagnetfeldquelle (20) vorgesehen ist, um das Kolbenmagnetfelds (N, S) und/oder das Statormagnetfeld (N', S') periodisch zu ändern, insbesondere umzukehren.

2. Kolbenmaschine nach Anspruch 1, dadurch gekenn zeichnet, dass eine (16) der Magnetfeldquellen (16, 20) einen Permanentmagneten aufweist und die andere (20) der Magnetfeldquelle (16, 20) eine Spule (20) aufweist, an die von der Steuereinheit (24) eine Spannung wechselnder Polarität angelegt wird.

3. Kolbenmaschine nach Anspruch 2, dadurch gekenn zeichnet, dass die Spule (20) um einen Polkern (44) gewickelt ist, der zwei gegenüberliegende Polschuhe (46) aufweist, und der Zylinder (12) zwischen den Polschuhen (46) angeordnet ist.

4. Kolbenmaschine nach Anspruch 2 oder 3, dadurch ge kennzeichnet, dass die Statormagnetfeldquelle (20) die bestromte Spule aufweist.

5. Kolbenmaschine nach einem der vorherigen Ansprü che, **dadurch gekennzeichnet, dass** jeweils über den Hubweg des Kolbens (16) verteilt mehrere, vorzugsweise zwei Statormagnetfeldquellen (20) angeordnet sind, die gleichsinnige Magnetfelder erzeugen.

6. Kolbenmaschine nach einem der vorherigen Ansprü che, **dadurch gekennzeichnet, dass** das Kolbenmagnetfeld (N, S) und/oder das Statormagnetfeld (N', S'), vorzugsweise beide Magnetfelder parallel zur Achse des Zylinders verlaufen.

7. Kolbenmaschine nach einem der vorherigen Ansprü che, **dadurch gekennzeichnet, dass** das Kolbenmagnetfeld (N, S) und/oder das Statormagnetfeld (N', S'), vorzugsweise beide Magnetfelder, senkrecht zu der Achse des Zylinders (12) verlaufen.

8. Kolbenmaschine nach einem der vorherigen Ansprü che, **dadurch gekennzeichnet, dass** der Zylinder (12; 12a, 12b) an beiden Stirnseiten jeweils einen Zylinderkopf (14; 14a, 14b) aufweist und der Kolben (16) mit den Zylinderköpfen (14; 14a, 14b) und dem Zylinder (12; 12a, 12b) zwei bezüglich des Kolbens (16) gegenüberliegende Arbeitsräume (19; 19a, 19b) begrenzt.

9. Kolbenmaschine nach Anspruch 8, dadurch gekenn zeichnet, dass die Arbeitsräume (19a, 19b) unterschiedlich große Querschnittsflächen haben, der Kolben (16, 48) ein Stufenkolben ist, die Kolbenteile den Arbeitsräumen (19a, 19b) entsprechende Querschnitte haben und der Auslass (32) des Arbeitsraumes (19a) mit der größeren Querschnittsfläche mit dem Einlass (26) des Arbeitsraumes (19b) mit der kleineren Querschnittsfläche verbunden ist.

10. Kolbenmaschine nach einem der vorherigen Ansprü che, **dadurch gekennzeichnet, dass** Einlass (26) und Auslass (32) eines Arbeitsraumes (19; 19a, 19b; 19c) jeweils ein die Durchflussrichtung bestimmendes Steuerorgan, insbesondere ein Überdruckventil (34) oder ein Rückschlagventil (28), aufweisen.

11. Kolbenmaschine nach einem der vorherigen Ansprü che, **dadurch gekennzeichnet, dass** ein Auslass des Zylinders (12) von einem Zylinderkopfdeckel (14) axial beabstandet in der Zylinderumfangswand vorgesehen ist.

12. Kolbenmaschine nach einem der vorherigen Ansprü che, **dadurch gekennzeichnet, dass** zwei Zylinder (12) koaxial fluchtend vorgesehen sind, in jedem Zylinder (12) ein Kolben (16) angeordnet ist, dass an jedem Zylinder (12) eine Statormagnetfeldquelle (20) angeordnet ist, dass die von den letzteren erzeugten Magnetfelder (N', S') so gerichtet sind, dass die Kolben (16) in entgegengesetzten Richtungen (18) symmetrisch zur Mitte der Zylinderanordnung hin- und herbewegt werden, und dass bie der Mitte der Zylinderanordnung eine weitere Einlassöffnung (26) und eine weitere Auslassöffnung (32) vorgesehen sind.

13. Kolbenmaschine nach einem der vorherigen Ansprüche, **dadurch gekennzeichnet, dass** der Kolben (16) über ein Energiespeichermittel, insbesondere eine Feder (50), in eine Endlage vorgespannt ist.

14. Kolbenmaschine nach einem der vorherigen Ansprüche, **dadurch gekennzeichnet, dass** der Zylinder (12) aus einem nicht magnetischen Material hergestellt ist, insbesondere Messing, Aluminium oder einem vorzugsweise faserverstärkten Kunststoff.

15. Kolbenmaschine nach einem der vorherigen Ansprüche, **dadurch gekennzeichnet, dass** die Kolbenmagnetfeldquelle in den Endlagen des Kolbens (16) der Mitte des Zylinders (12) näher benachbart ist als die Statormagnetfeldquelle (20).

16. Kolbenmaschine nach Anspruch 15, **dadurch gekennzeichnet, dass** die Länge der Kolbenmagnetfeldquelle größer ist als die Länge der Statomagnetfeldquelle (20).

## Claims

1. Piston engine (10), in particular for dental and medical purposes for the compression or suction of gas, especially air, having
a) an inlet opening (26) and an outlet opening (32);
b) having a cylinder (12; 12a, 12b; 12c);
c) a piston (16), which can be moved back and forth in the cylinder (12; 12a,12b; 12c) such that a front of the piston (16) and the cylinder (12; 12a, 12b; 12c) border a working space (19; 19a, 19b; 19c) that is in connection with the inlet opening (26) and the outlet opening (32) and;
d) a drive for the piston (16),
**characterised in that**,
e) the piston (16) has a piston magnetic field source that generates a piston magnetic field (N, S);
f) a stator magnetic field source (20) is provided, which produces a stator magnetic field (N', S') that penetrates the cylinder (12; 12a, 12b;, 12c), wherein the piston magnetic field (N, S) and the stator magnetic field are aligned in such a way that, if there is a change in the stator magnetic field (N', S') or in the piston magnetic field (N, S), a magnetic force acts on the piston (16) with components running in the direction of the cylinder axis;
g) a control unit (24) for the piston magnetic field source and/or the stator magnetic field source (20) is provided in order to periodically change, and in particular to reverse the piston magnetic field (N, S) and/or the stator magnetic field (N', S').

2. Piston engine according to claim 1, **characterised in that** one (16) of the magnetic field sources (16, 20) has a permanent magnet and the other (20) of the magnetic field sources (16, 20) has a coil (20) to which a voltage with alternating polarity is applied by the control unit (24).

3. Piston engine according to claim 2, **characterised in that** the coil (20) is wound around a pole core (44) that has two opposing pole shoes (46), and the cylinder (12) is arranged between the pole shoes (46).

4. Piston engine according to claim 2 or 3, **characterised in that** the stator magnetic field source (20) has the powered coil.

5. Piston engine according to one of the preceding claims, **characterised in that** numerous, preferably two, stator magnetic field sources (20) are arranged above the respective stroke path of the piston (16), which generate concordant magnetic fields.

6. Piston engine according to one of the preceding claims, **characterised in that** the piston magnetic field (N, S) and/or the stator magnetic field (N', S'), preferably both magnetic fields, run parallel to the axis of the cylinder.

7. Piston engine according to one of the preceding claims, **characterised in that** the piston magnetic field (N, S) and/or the stator magnetic field (N', S'), preferably both magnetic fields, run perpendicular to the axis of the cylinder (12).

8. Piston engine according to one of the preceding claims, **characterised in that** the cylinders (12; 12a, 12b) each have a cylinder head at both fronts (14; 14a, 14b), and the piston (16) with the cylinder heads (14; 14a, 14b) and the cylinder (12; 12a, 12b) have two work spaces (19; 19a, 19b) that lie opposite with respect to the piston (16).

9. Piston engine according to claim 8, **characterised in that** the work spaces (19a, 19b) have cross sections of varying sizes, the piston (16, 48) is a stepped piston, the piston parts have cross-sections that correspond to the working spaces (19a, 19b) and the outlet (32) of the working space (19a) with the larger cross-sectional surface is connected to the inlet (26) of the working space (19b) with the smaller cross-sectional surface.

10. Piston engine according to one of the preceding claims, **characterised in that** the inlet (26) and the outlet (32) of a working space (19; 19a, 19b; 19c) each have a flow direction-determining control unit, in particular an over-pressure valve (34) or a non-return valve (28).

11. Piston engine according to one of the preceding claims, **characterised in that** an outlet of the cylinder (12) is provided with axial separation from a cylinder head cover (14) in the cylinder perimeter.

12. Piston engine according to one of the preceding claims, **characterised in that** two cylinders (12) are provided with coaxial alignment to each other, a piston (16) is arranged in each cylinder (12), a stator magnetic field (20) is arranged on each cylinder (12), the magnetic fields (N', S') generated by the latter are directed in such a way that the pistons (16) are moved back and forth in opposite directions (18) symmetrically to the centre of the cylinder arrangement, and a further inlet opening (26) and a further outlet opening (32) are provided in the centre of the cylinder arrangement.

13. Piston engine according to one of the preceding claims, **characterised in that** the piston (16) is pre-stressed into an end position via an energy storage means, in particular a spring (50).

14. Piston engine according to one of the preceding claims, **characterised in that** the cylinder (12) is produced from a non-magnetic material, in particular brass, aluminium or a preferably fibre-reinforced plastic.

15. Piston engine according to one of the preceding claims, **characterised in that** the piston magnetic field source in the end positions of the piston (16) is closer to the centre of the cylinder (12) than the stator magnetic field source (20).

16. Piston engine according to claim 15, **characterised in that** the length of the piston magnetic field source is greater than the length of the stator magnetic field source (20).

## Revendications

1. Machine (10) à piston, notamment à des fins dentaires et médicales, pour la compression ou l'aspiration de gaz, notamment d'air, comprenant
a) une ouverture (26) d'entrée et une ouverture (32) de sortie ;
b) un cylindre (12, 12a, 12b, 12c) ;
c) un piston (16), qui peut aller et venir dans le cylindre (12, 12a, 12b, 12c), de manière à ce qu'un côté frontal du piston (16) et du cylindre (12, 12a, 12b, 12c) délimitent une chambre (19, 19a, 19b, 19c) de travail, qui est toujours en communication avec l'ouverture (26) d'entrée et avec l'ouverture (32) de sortie et
d) un entraînement du piston (16),
**caractérisée en ce que**
e) le piston (16) a une source de champ magnétique de piston, qui produit un champ (N, S) magnétique de piston ;
f) il est prévu une source (20) de champ magnétique de stator, qui produit un champ (N', S') magnétique de stator, qui traverse le cylindre (12, 12a, 12b, 12c), le champ (N, S) magnétique de piston et le champ magnétique de stator étant orientés de manière à ce que, s'il se produit une variation du champ (N', S') magnétique de stator ou du champ (N, S) magnétique de piston, une force magnétique agisse sur le piston (16) par une composante s'étendant dans la direction de l'axe du cylindre ;
g) il est prévu une unité (24) de commande de la source de champ magnétique de piston et/ou de la source (20) de champ magnétique de stator, pour modifier périodiquement, notamment inverser, le champ (N, S) magnétique de piston et/ou le champ (N', S') magnétique de stator.

2. Machine à piston suivant la revendication 1, **caractérisée en ce que** l'une (16) des sources (16, 20) de champ magnétique a un aimant permanent et l'autre (20) des sources (16, 20) de champ magnétique a une bobine (20), à laquelle est appliquée, par l'unité (24) de commande, une tension de polarité alternée.

3. Machine à piston suivant la revendication 2, **caractérisée en ce que** la bobine (20) est enroulée autour d'un noyau (44) polaire, qui a deux épanouissements (46) polaires opposés et le cylindre (12) est disposé entre les épanouissements (46) polaires.

4. Machine à piston suivant la revendication 2 ou 3, **caractérisée en ce que** la source (20) de champ magnétique de stator a la bobine alimentée en courant.

5. Machine à piston suivant l'une des revendications précédentes, **caractérisée en ce que** plusieurs, de préférence deux, sources (20) de champ magnétique de stator, qui produisent des champs magnétiques de même sens, sont disposées respectivement sur le trajet de course du piston (16).

6. Machine à piston suivant l'une des revendications précédentes, **caractérisée en ce que** le champ (N, S) magnétique de piston et/ou le champ (N', S') magnétique de stator, de préférence les deux champs magnétiques, s'étendent parallèlement à l'axe du cylindre.

7. Machine à piston suivant l'une des revendications précédentes, **caractérisée en ce que** le champ (N, S) magnétique de piston et/ou le champ (N', S') magnétique de stator, de préférence les deux champs magnétiques, s'étendent perpendiculairement à l'axe du cylindre (12).

8. Machine à piston suivant l'une des revendications précédentes, **caractérisée en ce que** le cylindre (12, 12a, 12b) a, sur les deux côtés frontaux, respectivement une tête (14, 14a, 14b) de cylindre et le piston (16) délimite, avec les têtes (14, 14a, 14b) de cylindre et le cylindre (12, 12a, 12b), deux chambres (19, 19a, 19b) de travail, en opposition par rapport au piston (16).

9. Machine à piston suivant la revendication 8, **caractérisée en ce que** les chambres (19a, 19b) de travail ont des surfaces de section transversale de dimensions différentes, le piston (16, 48) est un piston à gradins, les parties du piston ont des sections transversales correspondantes aux chambres (19a, 19b) de travail et la sortie (32) de la chambre (19a) de travail ayant la surface de section transversale la plus grande communique avec l'entrée (26) de la chambre (19b) de travail ayant la surface de section transversale la plus petite.

10. Machine à piston suivant l'une des revendications précédentes, **caractérisée en ce que** l'entrée (26) et la sortie (32) d'une chambre (19, 19a, 19b, 19c) de travail ont respectivement un organe de commande déterminant le sens de passage, notamment une soupape (34) de surpression ou un clapet (28) anti-retour.

11. Machine à piston suivant l'une des revendications précédentes, **caractérisée en ce qu'**une sortie du cylindre (12) est dans la paroi périphérique du cylindre, à distance axialement, d'un couvercle (14) de la tête du cylindre.

12. Machine à piston suivant l'une des revendications précédentes, **caractérisée en ce qu'**il est prévu deux cylindres (12) alignés co-axialement, un piston (16) est monté dans chaque cylindre (12), une source (20) de champ magnétique de stator est montée sur chaque cylindre (12), les champs (N', S') magnétiques produits par ces dernières sont orientés de manière à ce que le piston (16) aille et vienne dans des sens (18) opposés symétriquement par rapport au milieu de l'agencement de cylindres et il est prévu, de part et d'autre du milieu de l'agencement de cylindres, une autre ouverture (26) d'entrée et une autre ouverture (32) de sortie.

13. Machine à piston suivant l'une des revendications précédentes, **caractérisée en ce que** le piston (16) est précontraint dans une position d'extrémité par un moyen d'accumulation d'énergie, notamment par un ressort (50).

14. Machine à piston suivant l'une des revendications précédentes, **caractérisée en ce que** le cylindre (12) est en un matériau amagnétique, notamment en laiton, en aluminium ou en une matière plastique, de préférence renforcée par de la fibre.

15. Machine à piston suivant l'une des revendications précédentes, **caractérisée en ce que** la source de champ magnétique de piston est, dans les positions d'extrémités du piston (16), plus près du milieu du cylindre (12) que la source (20) de champ magnétique de stator.

16. Machine à piston suivant la revendication 15, **caractérisée en ce que** la longueur de la source de champ magnétique et de piston est plus grande que la longueur de la source (20) de champ magnétique de stator.
